# EUROPÄISCHE PATENTSCHRIFT

(11) **EP 2 163 575 B1**
(45) Veröffentlichungstag und Bekanntmachung des Hinweises auf die Patenterteilung: **19.10.2011**
(21) Anmeldenummer: 09167592.6
(22) Anmeldetag: 11.08.2009
(51) Int. Cl.: C08K 3/36, C08L 21/00, C08K 9/04, C08K 5/00, C08J 3/215

(54) **Gummiartikel, enthaltend kolloidale Kieselsäure**
Rubber item comprising colloidal silica
Article de caoutchouc comprenant de la silice colloïdale

(30) Priorität: 11.09.2008 DE 102008046874
(43) Veröffentlichungstag der Anmeldung: 17.03.2010
(73) Patentinhaber: Continental Reifen Deutschland GmbH, 30165 Hannover (DE)
(72) Erfinder: Schmidt, Carmen Dr., 30451, Hannover (DE); Fey, Thomas Dr., 34454, Bad Arolsen (DE)
(74) Vertreter: Finger, Karsten

(56) Entgegenhaltungen:
- EP-A1- 0 258 554
- EP-A1- 1 321 488
- WO-A2-01/52618
- DE-A1- 19 814 839
- US-A- 2 885 456
- US-A- 3 627 724
- US-A1- 2003 114 571

## Beschreibung

Die Erfindung betrifft einen Gummiartikel, insbesondere einen Fahrzeugluftreifen.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche durchgeführt, die Laufstreifenmischungen hinsichtlich ihrer Polymerkomponenten und ihrer Füllstoffe zu variieren. Es ist beispielsweise bekannt, der Kautschukmischung als Füllstoffe Ruß und/oder Kieselsäure zuzusetzen.

Eines der Ziele die bei der Reifenentwicklung im Vordergrund stehen, ist die Verringerung des Rollwiderstandes, was einen verminderten Kraftstoffverbrauch mit sich bringt. Durch den Einsatz von Kieselsäure enthaltenden Mischungen kann der Rollwiderstand gegenüber Mischungen, die nur Ruß enthalten, verbessert werden. Gleichzeitig sollte idealerweise keine Verschlechterung der anderen Reifeneigenschaften, wie Nassgriff, Reißeigenschaften und vor allem Abrieb beobachtet werden.

Da die Verteilung der Kieselsäure in der Kautschukmischung und die Art der Kieselsäure einen großen Einfluss auf die Reifeneigenschaften haben, wurden schon verschiedene Versuche unternommen, Kieselsäure mit entsprechenden Charakteristika, wie z.B. mit einer großen spezifischen hydrophilen Oberfläche, zu synthetisieren oder die Kieselsäure vorzubehandeln, zu modifizieren oder der Mischung spezielle Zusatzstoffe hinzuzufügen, um eine optimale Verteilung und optimale Reifeneigenschaften, vor allem ein verbessertes Abriebsverhalten, verbesserten Rollwiderstand und Verbesserung der Rißeigenschaften, zu bewirken.

Bei Verwendung von Kieselsäuren gemäß z.B. EP 0520862 B1, EP 0670813 B1 EP 917519 B1, US 2005 / 0004297 A1, US 5,846,311 und US 5,929,156 wird versucht das Problem des Abriebverhaltens durch eine besonders gute Dispergierbarkeit der Kieselsäuren zu lösen. Es hat sich jedoch gezeigt, dass eine gute Dispergierbarkeit alleine nicht ausreichend ist um das Problem zufrieden stellend zu lösen.

Aus DE 60109579 T2 und DE 60212052 T2 sind zum einen ein Verfahren zum Herstellen einer stabilisierten Kieselsäure, wobei das kolloidale Siliziumdioxid (=Kieselsäure) in wässrigem Lösungsmittel stabilisiert wird, bzw. zum anderen ein Verfahren zur Herstellung eines Komposits umfassen das Herstellen einer Wasserdispersion eines Komposits, gebildet unter anderem durch Mischen einer wässrigen kolloidalen Silikaaufschlämmung, bekannt. Bei ersterem geht es vor allem darum, die Eigenschaften des Verstärkungsfüllstoffs zu optimieren. Bei letzterem muss das Komposit ein durch Emulsionspolymerisation hergestelltes synthetisches Elastomer enthalten. Auf die Vorteile bezüglich der physikalischen Eigenschaften der Artikel, die nach diesen Verfahren hergestellte Stoffe enthalten, wird allerdings nicht oder nur grob eingegangen.

Der Erfindung liegt die Aufgabe zu Grunde, einen Gummiartikel, insbesondere einen Fahrzeugluftreifen, bereitzustellen, der sich durch ein verbessertes Rollwiderstandsverhalten auszeichnet.

Gelöst wird die Aufgabe dadurch, dass der Gummiartikel zumindest aus einer Kautschukmischung mit folgender Zusammensetzung aufgebaut ist:
- zumindest einem polaren oder unpolaren Kautschuk;
- zumindest eines Füllstoffes in Form einer kolloidalen Kieselsäure; wobei die kolloidale Kieselsäure in mindestestens einem öl stabilisiert wird;
- weiteren Zusatzstoffen.

Überraschenderweise wurde gefunden, dass der erfindungsgemäße Gummiartikel, insbesondere ein Fahrzeugluftreifen, durch den Einsatz zumindest eines Füllstoffes in Form einer kolloidalen Kieselsäure, einen verbesserten Rollwiderstand und ein verbessertes Rißverhalten aufweist, während die weiteren physikalischen Eigenschaften, wie z. B. das Nassbremsen auf gleichem Niveau verbleiben. Dies gilt nicht nur, wenn für den Fahrzeuglaufstreifen die gemäß Kennzeichen des Anspruchs 1 definierte Kautschukmischung verwendet wird, sondern auch wenn dies in weiteren, innere Reifenbauteile eingesetzt wird, welche im Folgenden zusammengefasst, und wie in der Reifentechnologie üblich, auch als body compounds oder body-Mischungen bezeichnet werden.
Weitere Gummiartikel können Riemen und Gurte sein. Diese technischen Gummiartikel finden im täglichen Leben überall Verwendung, z.B. in Aufzügen, in der Stein- und Erdenindustrie und in der Automobilindustrie. Daher kommt auch hier dem verbesserten Rollwiderstand, der gekoppelt ist mit einem schlechteren Wärmeaufbau, bei gleich bleibenden oder sich verbessernden weiteren physikalischen Eigenschaften eine zentrale Bedeutung zu.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen Kautschuke bezogen.

Die Kautschukmischung, aus der der Gummiartikel aufgebaut ist, enthält zumindest einen polaren oder unpolaren Kautschuk.
Der polare oder unpolare Kautschuk ist dabei ausgewählt aus der Gruppe, bestehend aus natürlichem Polyisopren und / oder synthetischem Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder Halonitrilbutylkautschuk und / oder Isopren-Butadien-Copolymer.

Insbesondere Styrol-Isopren-Butadien-Terpolymer, Butylkautschuk, Halobutylkautschuk oder Ethylen-Propylen-Dien-Kautschuk kommen bei der Herstellung von technischen Gummiartikeln, wie Gurte und Riemen, zum Einsatz.

Bevorzugt ist es allerdings, wenn die Kautschukmischung natürliches und / oder synthetisches Polyisopren enthält und zwar in Mengen von 0,1 - 100 phr, bevorzugt in Mengen von 1 - 80 phr.
In einer besonderen Ausführungsform handelt es sich bei dem polaren oder unpolaren Kautschuk um einen Butadien-Kautschuk, der hydriert sein kann. Der Butadien-Kautschuk wird vorzugsweise in Mengen von 0,1 - 100 phr, bevorzugt in Mengen von 0,1 - 80 phr verwendet.

Der polare oder unpolare Kautschuk kann ein Styrolbutadienkautschuk sein, der bevorzugt lösungspolymerisiert oder emulsionspolymerisiert ist. Der Styrolbutadienkautschuk ist bevorzugt hydriert.
Der Styrolbutadienkautschuk findet in Mengen von 10 - 99,8 phr, bevorzugt 15 - 99,8 phr, Verwendung.
Des Weiteren kann der polare oder unpolare Kautschuk mit Hydroxylgruppen und / oder Epoxygruppen und / oder Siloxangruppen und / oder Aminogruppen und / oder Aminosiloxan und / oder Carboxylgruppen und / oder Phtalocyaningruppen funktionalisiert sein. Es kommen aber auch weitere, dem Fachmann bekannte, Funktionalisierungen, auch als Modifizierungen bezeichnet, in Frage.
Der polare oder unpolare Kautschuk kann allerdings auch nicht funktionalisiert sein.

Erfindungswesentlich ist, dass die Kautschukmischung, aus der der Gummiartikel aufgebaut ist, zumindest einen Füllstoff in Form einer kolloidalen Kieselsäure enthält und zwar bevorzugt in Mengen von 0,1 bis 150 phr, besonders bevorzugt in Mengen von 1 bis 100 phr, wiederum besonders bevorzugt in Mengen von 5 bis 80 phr.

Üblicherweise wird die kolloidale Kieselsäure, siehe auch DE 60109579 T2 und DE 60212052 T2, in einem wässrigen Lösungsmittel stabilisiert. Dies hat sich für die Verwendung in Gummiartikeln als mangelhaft erwiesen, da das Vorhandensein von Wasser, vor allem aufgrund seiner Polarität und niedrigen Viskosität, insbesondere das Mischverhalten der entsprechenden Kieselsäure negativ beeinträchtigt.
Daher ist die kolloidale Kieselsäure in mindestens einem Öl stabilisiert. Vorstellbar ist es aber auch, wenn die kolloidale Kieselsäure in weiteren höher viskosen Stoffen, wie flüssigen Polymeren oder Alterungsschutzmittel, stabilisiert ist. Stabilisiert bedeutet in diesem Zusammenhang das Vorliegen einer Dispersion, wobei der Wassergehalt und / oder der Gehalt an wassermischbaren Lösemitteln weniger als 10 Gew.-%, ausgehend vom Gesamtgewicht der Dispersion, beträgt.
Dadurch wird eine bessere Dispergierung der kolloidalen Kieselsäure, insbesondere auch gezielt in verschiedenen Phasen des Mischprozesses, erlangt.
Die Dispergierung bzw. die Verteilung der Füllstoffe innerhalb der Kautschukmatrix hat einen wesentlichen Einfluß auf die physikalischen Eigenschaften des erhaltenen Gummiartikels.

Bei dem Öl, in welchem die kolloidale Kieselsäure stabilisiert ist, handelt es sich um ein Mineralöl oder ein Pflanzenöl.
Das Mineralöl ist hierbei ausgewählt aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle. Bevorzugt handelt es sich aber um TDAE.
Das Pflanzenöl ist hierbei ausgewählt aus der Gruppe, bestehend aus Rapsöl und / oder Sonnenblumenöl und / oder Olivenöl und / oder Erdnussöl und / oder Sojaöl und / oder Leinöl und / oder Maiskeimöl und / oder Baumwollsaatöl und / oder Palmkernöl und / oder Teesamenöl und / oder Haselnussöl und / oder Walnussöl und / oder Rizinusöl und / oder Reisöl und / oder Maisöl und / oder Palmöl, wobei Rapsöl und / oder Sonnenblumenöl bevorzugt sind.

Die durchschnittliche Partikelgröße der kolloidalen Kieselsäure liegt zwischen 5 bis 100nm im Durchmesser, während die durchschnittliche Partikeldichte zwischen 2 bis 2,5 g / cm³, bevorzugt zwischen 2,1 bis 2,3 g / cm³, beträgt.

Erfindungswesentlich ist hierbei, dass es sich bei der kolloidalen Kieselsäure um hochdisperse Nanopartikel handelt. Wie bereits obig erwähnt ist die exzellente Dispergierbarkeit insbesondere zur Verbesserung des Rollwiderstandes notwendig.

Weiterhin enthält die Kautschukmischung, aus der der Gummiartikel aufgebaut ist, noch weitere Zusatzstoffe.
Weitere Zusatzstoffe beinhaltet im Wesentlichen Weichmacher, das Vernetzungssystem (Vernetzer, Beschleuniger und Verzögerer), Ozonschutzmittel, Alterungsschutzmittel, Mastikationshilfsmittel, weitere Aktivatoren und Verarbeitungshilfsmittel.
Der Mengenanteil der Gesamtmenge an weiteren Zusatzstoffen beträgt 1 bis 300 phr, bevorzugt 1 bis 250 phr.

Im Gesamtmengenanteil an weiteren Zusatzstoffen sind noch weitere Füllstoffe oder keine weiteren Füllstoffe enthalten sein.
Falls weitere Füllstoffe enthalten sind, so liegen sie in Mengen von 0,1 bis 150 phr, bevorzugt in Mengen von 1 bis 100 phr, vor.
Dabei kann es sich um weitere helle und / oder dunkle Füllstoffe handeln.
Wird ein dunkler Füllstoff verwendet, so handelt es sich bevorzugt um zumindest einen Ruß. In einer besonders bevorzugten Ausführungsform hat der Ruß eine Iodzahl, gemäß ASTM D 1510, die auch als Iodabsorptionszahl bezeichnet wird, größer oder gleich 75 g / kg und einer DBP-Zahl größer oder gleich 80 cm³ /100g. Die DBP-Zahl gemäß ASTM D 2414 bestimmt das spezifische Absorptionsvolumen eines Rußes oder eines hellen Füllstoffes mittels Dibutylphthalat.
Die Verwendung eines solchen Russtyps in der Kautschukmischung, insbesondere für Fahrzeugluftreifen, gewährleistet einen bestmöglichen Kompromiss aus Abriebwiderstand und Wärmeaufbau, der wiederum den ökologisch relevanten Rollwiderstand beeinflusst. Bevorzugt ist hierbei, wenn lediglich ein Russtyp in der jeweiligen Kautschukmischung verwendet wird, es können aber auch verschiedene Russtypen in die Kautschukmischung eingemischt werden.
Wird ein weiterer heller Füllstoff verwendet, so handelt es sich bevorzugt um einer der kolloidalen Kieselsäure verschiedene amorphe Kieselsäure oder um eine Fällungskieselsäure.

Die in der Reifenindustrie eingesetzten Kieselsäuren sind in der Regel gefällte Kieselsäuren, die insbesondere nach ihrer Oberfläche charakterisiert werden. Zur Charakterisierung werden dabei die Stickstoff-Oberfläche (BET) gemäß DIN 66131 und DIN 66132 als Maß für die innere und äußere Füllstoffoberfläche in m²/g und die CTAB-Oberfläche gemäß ASTM D 3765 als Maß für die äußere Oberfläche, die oftmals als die kautschukwirksame Oberfläche angesehen wird, in m²/g angegeben.
Erfindungsgemäß werden Kieselsäuren mit einer Stickstoff-Oberfläche größer oder gleich 120 m²/g, bevorzugt zwischen 120 und 300 m²/g, besonders bevorzugt zwischen 150 und 250 m²/g, und einer CTAB-Oberfläche zwischen 120 und 230 m²/g, bevorzugt zwischen 140 und 200 m²/g, eingesetzt.

Falls ein Kupplungsagens, in Form von Silan oder einer siliziumorganischen Verbindung, verwendet wird, so beträgt die Menge des Kupplungsagens 0 - 20 phr, bevorzugt 0 - 15 phr, besonders bevorzugt 0,1 - 10 phr. Als Kupplungsagenzien können dabei alle dem Fachmann für die Verwendung in Kautschukmischungen Kupplungsagenzien, wie z.B. TESPD (Bis-triethoxysilylpropyl-disulfan), verwendet werden. Besonders zu erwähnen sind hierbei Mercaptosilane und hierbei insbesondere solche, welche sich durch eine Reduzierung der leicht flüchtigen organischen Bestandteile auszeichnen, wie sie, beispielhaft für weitere Druckschriften, in DE 10 2005 057 801, WO99/09036, WO2002/048256 und WO2006/015010 zu finden sind.

Von dieser Gesamtmenge an Kieselsäure, d.h. die kolloidale Kieselsäure und die von der kolloidalen Kieselsäure verschiedene amorphe Kieselsäure oder Fällungskieselsäure, können 0 - 100 % durch ein Kupplungsagens, bevorzugt Silan, an die Polymermatrix angebunden werden und / oder 0 - 100 % nicht an die Polymermatrix angebunden werden. Dies bedeutet, dass, ausgehend von der Gesamtmenge an Kieselsäure, diese durch das Kupplungsagens vollständig oder nur teilweise an die Polymermatrix angebunden wird oder keinerlei Anbindung der Kieselsäure an die Polymermatrix erfolgt.

Im Gesamtmengenanteil an weiteren Zusatzstoffen ist zumindest ein Weichmacher enthalten, der ausgewählt ist aus der Gruppe, bestehend aus DAE (Destillated Aromatic Extracts) und / oder RAE (Residual Aromatic Extract) und / oder TDAE (Treated Destillated Aromatic Extracts) und / oder MES (Mild Extracted Solvents) und / oder naphtenische Öle und / oder Fettsäuren und / oder Fettsäurederivaten und / oder Harze und / oder Faktisse.

Weiterhin ist im Gesamtmengenanteil der weiteren Zusatzstoffe noch zumindest ein Vulkanisationsbeschleuniger, bevorzugt in Mengen von 0,1 bis 10 phr, vorhanden. Dieser Vulkanisationsbeschleuniger ist ausgewählt aus der Gruppe, enthaltend Thiazolbeschleuniger, Mercaptobeschleuniger, Sulfenamidbeschleuniger, Guanidinbeschleuniger, Thiurambeschleuniger, Dithiocarbamatbeschleuniger, Aminbeschleuniger, Thioharnstoffe und / oder sonstige Beschleuniger.

Im Gesamtmengenanteil der weiteren Zusatzstoffe finden sich noch 0,1 - 10 phr, bevorzugt 0,2 - 8 phr, besonders bevorzugt 0,2 - 4 phr, Zinkoxid und / oder Zinkstearat. Es ist üblich, einer Kautschukmischung für die Schwefelvernetzung mit
Vulkanisationsbeschleunigern Zinkoxid und / oder Zinkstearat als Aktivator, insbesondere Zinkoxid oft in Kombination mit Fettsäuren (z. B. Stearinsäure), zuzusetzen. Der Schwefel wird dann durch Komplexbildung für die Vulkanisation aktiviert. Das herkömmlicherweise verwendete Zinkoxid weist dabei in der Regel eine BET-Oberfläche von weniger als 10 m²/g auf. Es kann aber auch so genanntes nano-Zinkoxid mit einer BET-Oberfläche von 10 bis 60 m²/g verwendet werden.

Die Vulkanisation der Kautschukmischung, aus der der Gummiartikel aufgebaut ist, wird vorzugsweise in Anwesenheit von freiem Schwefel oder Schwefelspendern durchgeführt, wobei einige Schwefelspender zugleich als Vulkanisationsbeschleuniger wirken können. Freier Schwefel oder Schwefelspender werden im letzten Mischungsschritt in den vom Fachmann gebräuchlichen Mengen (0,4 bis 4 phr, Schwefel bevorzugt in Mengen von 1,5 bis 2,5 phr) der Kautschukmischung zugesetzt. Zur Kontrolle der erforderlichen Zeit und / oder Temperatur der Vulkanisation und zur Verbesserung der Vulkanisateigenschaften kann die Kautschukmischung vulkanisationsbeeinflussende Substanzen wie Vulkanisationsbeschleuniger, Vulkanisationsverzögerer, die erfindungsgemäß in den obig beschriebenen Zusatzstoffen enthalten sind, und Vulkanisationsaktivatoren, wie obig beschrieben, enthalten.

Die Herstellung der entsprechenden Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z.B. durch einen Extrusionsvorgang weiterverarbeitet und in die entsprechende Form gebracht.

Handelt es sich bei dem Gummiartikel um einen Fahrzeugluftreifen, so wird die Mischung bevorzugt in die Form eines Laufstreifens gebracht und bei der Herstellung des Fahrzeugreifenrohlings wie bekannt aufgebracht. Der Laufstreifen kann aber auch in Form eines schmalen Kautschukmischungsstreifens auf einen Reifenrohling aufgewickelt werden. Ist der Laufstreifen, wie eingangs beschrieben, zweigeteilt, so findet die Kautschukmischung bevorzugt Anwendung als Mischung für die Cap. Zur weiteren Optimierung des Rollwiderstandes findet die Mischung darüber hinaus Anwendung als Mischung für die Base.
Die Herstellung der Kautschukmischung zur Verwendung als Body- Mischung in Fahrzeugreifen erfolgt wie bereits für den Laufstreifen beschrieben. Der Unterschied liegt in der Formgebung nach dem Extrusionsvorgang. Die so erhaltenen Formen der Kautschukmischung für eine oder mehrere unterschiedliche Body-Mischungen dienen dann dem Aufbau eines Reifenrohlings. Handelt es sich bei dem Gummiartikel um einen Riemen oder einen Gurt, insbesondere um einen Fördergurt, so wird die extrudierte Mischung in die entsprechende Form gebracht und dabei oder nachher häufig mit Festigkeitsträgern, z.B. synthetische Fasern oder Stahlcorde, versehen. Zumeist ergibt sich so ein mehrlagiger Aufbau, bestehend aus einer und / oder mehrerer Lagen Kautschukmischung, einer und / oder mehrerer Lagen gleicher und / oder verschiedener Festigkeitsträger und einer und / oder mehreren weiteren Lagen dergleichen und / oder einer anderen Kautschukmischung.

Die Erfindung soll nun anhand von Vergleichs- und Ausführungsbeispielen, die in Tabellen 1 und 2 zusammengefasst sind, näher erläutert werden. Die mit "E" gekennzeichneten Mischungen sind hierbei Mischungen, aus der der erfindungsgemäße Gummiartikel aufgebaut wird, während es sich bei der mit "V" gekennzeichneten Mischung um eine Vergleichsmischung handelt.

Bei sämtlichen in der Tabelle enthaltenen Mischungsbeispielen sind die angegebenen Mengenangaben Gewichtsteile, die auf 100 Gewichtsteile Gesamtkautschuk bezogen sind (phr).

Die Mischungsherstellung erfolgte unter üblichen Bedingungen in zwei Stufen in einem Labortangentialmischer. Aus sämtlichen Mischungen wurden Prüfkörper durch Vulkanisation hergestellt und mit diesen Prüfkörpern für die Kautschukindustrie typische Materialeigenschaften bestimmt. Für die obig beschriebenen Tests an Prüfkörpern wurden folgende Testverfahren angewandt:
- Shore-A-Härte bei Raumtemperatur und 70°C gemäß DIN 53 505
- Rückprallelastizität bei Raumtemperatur und 70°C gemäß DIN 53 512
- Spannungswerte bei 100 und 200 % Dehnung bei Raumtemperatur gemäß DIN 53 504
- Zugfestigkeit bei Raumtemperatur gemäß DIN 53 504
- Reißdehnung bei Raumtemperatur gemäß DIN 53 504
- Partikelanzahl und Partikelfläche durch lichtmikroskopische Analyse

**Tabelle 1**

| **Bestandteile** | **Einheit** | **V1** | **E1** | **E2** |
|---|---|---|---|---|
| BR^{a} | phr | 50 | 50 | 50 |
| SSBR^{b} | phr | 50 | 50 | 50 |
| Kieselsäure^{c} | phr | 7 | -- | -- |
| Kieselsäure^{d} | phr | -- | 52 | 52 |
| Weichmacher^{e} | phr | 45 | -- | -- |
| Zinkstearat | phr | 1 | 1 | 1 |
| Silan^{f} | phr | 1,2 | -- | 1,0 |
| DPG / CBS / Schwefel | phr | 2 / 2 / 2 | 2 / 2 / 2 | 2 / 2 / 2 |

| | | | | |
|---|---|---|---|---|
| ^{a} High-cis Polybutadien , cis-Anteil ≥ 95 Gew.-%, Buna CB25, Fa. Lanxess ^{b} SSBR Styrolbutadienkautschuk, Nipol NS116R, Fa. Nippon Zeon ^{c} VN3, Fa. Evonik ^{d} kolloidale Kieselsäure, 13,2 Gew.-% in TDAE-Öl, durchschnittliche Partikelgröße ca. 22 nm, CTAB ca. 138 m²/g ^{e} TDAE-Öl ^{f} A1589, Fa. Momentive Performance Materials | | | | |

**Tabelle 2**

| **Eigenschaften** | **Einheit** | **V1** | **E1** | **E2** |
|---|---|---|---|---|
| Härte bei RT | Shore A | 30,9 | 29,4 | 30,8 |
| Härte bei 70°C | Shore A | 32,2 | 29,6 | 31,5 |
| Rückprall bei RT | % | 63,8 | 60,4 | 61,9 |
| Rückprall bei 70°C | % | 67,6 | 65,1 | 67,3 |
| Delta Rückprall | % | 3,8 | 4,7 | 5,4 |
| Spannungswert 100% | MPa | 0,5 | 0,43 | 0,48 |
| Spannungswert 200% | MPa | 0,78 | 0,64 | -- |
| Zugfestigkeit bei RT | MPa | 0,8 | 0,7 | 0,7 |
| Reißdehnung bei RT | % | 238 | 233 | 197 |
| Anzahl Partikel | -- | 726 | 17 | 17 |
| Max. Partikelfläche | 10⁻⁶m² | 4445 | 402 | 790 |
| Mittl. Partikelfläche | 10⁻⁶m² | 138 | 111 | 108 |

Bei Betrachtung der Mischungszusammensetzungen, wie sie in der Tabelle 1 dargestellt ist, und den resultierenden physikalischen Eigenschaften, wie sie in der Tabelle 2 dargestellt ist, so lässt sich zusammenfassend feststellen, dass sich durch die Verwendung von kolloidaler Kieselsäure die Mischungseigenschaften verbessern.

Die Mischungshärten und Reißeigenschaften, dargestellt durch die Spannungswerte, Zugfestigkeit und Reißdehnung verbleiben nahezu konstant, während das Nassbremsverhalten, dargestellt durch den Rückprall bei Raumtemperatur, sich scheinbar verschlechtert und das ökologisch relevante Rollwiderstandsverhalten, dargestellt durch den Rückprall bei 70°C, verbessert. Betrachtet man allerdings den Wert für Delta Rückprall (Rückprall 70°C minus Rückprall RT), so zeigen sich die Werte für E1 und E2 deutlich erhöht, was daraufhin weist, das der Zielkonflikt zwischen Nassbremsen und Rollwiderstand sich erheblich verbessert. Ebenso zeigt sich bei Verwendung von kolloidaler Kieselsäure eine markante Verbesserung der Füllstoffinkorporation vergleichbaren verstärkenden Eigenschaften. Die lichtmikroskopische Analyse zeigt, dass die Anzahl detektierbarer Partikel um mehr als eine Größenordnung reduziert wird. Zugleich ist eine deutliche Reduzierung der maximalen Partikelgrößen der detektierten Partikel zu erkennen. Der fachkundigen Person ist bekannt, das diese Verbesserung der Füllstoffinkorporation eine signifikante Verbesserung des Abriebverhaltens zur Folge hat.

## Patentansprüche

1. Gummiartikel, **dadurch gekennzeichnet, dass** er zumindest aus einer Kautschukmischung mit folgender Zusammensetzung aufgebaut ist:
- zumindest einem polaren oder unpolaren Kautschuk;
- zumindest eines Füllstoffes in Form einer kolloidalen Kieselsäure wobei die kolloidale Kieselsäure in mindestens einem Öl stabilisiert ist;
- weiteren Zusatzstoffen.

2. Gummiartikel nach Anspruch 1, **dadurch gekennzeichnet, dass** der polare oder unpolare Kautschuk der Kautschukmischung ausgewählt ist aus der Gruppe, bestehend aus natürlichem Polyisopren und / oder synthetisches Polyisopren und / oder Butadien-Kautschuk und / oder Styrolbutadienkautschuk und / oder lösungspolymerisierter Styrolbutadienkautschuk und / oder emulsionspolymerisierter Styrolbutadienkautschuk und / oder Flüssigkautschuken und / oder Halobutylkautschuk und / oder Polynorbornen und / oder Isopren-Isobutylen-Copolymer und / oder Ethylen-Propylen-Dien-Kautschuk und / oder Nitrilkautschuk und / oder Chloroprenkautschuk und / oder Acrylat-Kautschuk und / oder Fluorkautschuk und / oder Silikon-Kautschuk und / oder Polysulfidkautschuk und / oder Epichlorhydrinkautschuk und / oder Styrol-Isopren-Butadien-Terpolymer und / oder Halonitrilbutylkautschuk und / oder Isopren-Butadien-Copolymer.

3. Gummiartikel nach Anspruch 1 oder 2, **dadurch gekennzeichnet, dass** die Kautschukmischung 0,1 - 100 phr zumindest eines natürlichen oder synthetischen Polyisoprens enthält.

4. Gummiartikel nach Anspruch 3, **dadurch gekennzeichnet, dass** die Kautschukmischung 1 - 80 phr zumindest eines natürlichen oder synthetischen Polyisoprens enthält.

5. Gummiartikel nach einem der Ansprüche 1 bis 4, **dadurch gekennzeichnet, dass** die Kautschukmischung 0,1 - 100 phr zumindest eines Butadienkautschuks enthält.

6. Gummiartikel nach einem der Ansprüche 1 bis 5, **dadurch gekennzeichnet, dass** die Kautschukmischung 10 - 99,8 phr zumindest eines Styrol-Butadienkautschuks enthält.

7. Gummiartikel nach einem der Ansprüche 1 bis 6, **dadurch gekennzeichnet, dass** die Kautschukmischung 0,1 bis 150 phr kolloidale Kieselsäure enthält.

8. Gummiartikel nach Anspruch 1, **dadurch gekennzeichnet, dass** das Öl zur Stabilisierung der kolloidalen Kieselsäure ein Mineralöl oder ein Pflanzenöl ist.

9. Gummiartikel nach einem der Ansprüche 1 bis 8, **dadurch gekennzeichnet, dass** die kolloidale Kieselsäure eine durchschnittliche Partikelgröße zwischen 5 bis 100 nm im Durchmesser besitzt.

10. Gummiartikel nach einem der Ansprüche 1 bis 9, **dadurch gekennzeichnet, dass** die kolloidale Kieselsäure eine durchschnittliche Partikeldichte zwischen 2 bis 2,5 g/cm³ besitzt.

11. Gummiartikel nach einem der Ansprüche 1 bis 10, **dadurch gekennzeichnet, dass** die Kautschukmischung 1 bis 300 phr weitere Zusatzstoffe enthält.

12. Gummiartikel nach einem der Ansprüche 1 bis 11, **dadurch gekennzeichnet, dass** es sich um einen Fahrzeugluftreifen handelt.

13. Gummiartikel nach Anspruch 12, **dadurch gekennzeichnet, dass** es sich um einen Fahrzeugluftreifen mit einem einteileigen oder mehrteiligen Laufstreifen handelt.

14. Gummiartikel nach Anspruch 12, **dadurch gekennzeichnet, dass** es sich um einen Fahrzeugluftreifen enthaltend Seitenwand und / oder Innenseele und / oder Apex und / oder Gürtel und / oder Schulter und / oder Gürtelprofil und / oder Squeege und / oder Karkasse und / oder Wulstverstärker und / oder Bandage und / oder mondsichelförmige Verstärkungseinlage handelt.

15. Gummiartikel nach einem der Ansprüche 1 bis 11, **dadurch gekennzeichnet, dass** es sich um einen Gurt oder um einen Riemen handelt.

## Claims

1. Rubber article, **characterized in that** it is composed at least of a rubber mixture having the following composition:
- at least one polar or nonpolar rubber;
- at least one filler in the form of a colloidal silicic acid, wherein the colloidal silicic acid is stabilized in at least one oil;
- further additives.

2. Rubber article according to Claim 1, **characterized in that** the polar or nonpolar rubber of the rubber mixture is selected from the group consisting of natural polyisoprene and/or synthetic polyisoprene and/or butadiene rubber and/or styrene-butadiene rubber and/or solution-polymerized styrene-butadiene rubber and/or emulsion-polymerized styrene-butadiene rubber and/or liquid rubbers and/or halobutyl rubber and/or polynorbornene and/or isoprene-isobutylene copolymer and/or ethylene-propylenediene rubber and/or nitrile rubber and/or chloroprene rubber and/or acrylate rubber and/or fluorine rubber and/or silicone rubber and/or polysulphide rubber and/or epichlorohydrin rubber and/or styrene-isoprene-butadiene terpolymer and/or halonitrile-butyl rubber and/or isoprene-butadiene copolymer.

3. Rubber article according to Claim 1 or 2, **characterized in that** the rubber mixture contains 0.1 - 100 phr of at least one natural or synthetic polyisoprene.

4. Rubber article according to Claim 3, **characterized in that** the rubber mixture contains 1 - 80 phr of at least one natural or synthetic polyisoprene.

5. Rubber article according to any of Claims 1 to 4, **characterized in that** the rubber mixture contains 0.1 - 100 phr of at least one butadiene rubber.

6. Rubber article according to any of Claims 1 to 5, **characterized in that** the rubber mixture contains 10 - 99.8 phr of at least one styrene-butadiene rubber.

7. Rubber article according to any of Claims 1 to 6, **characterized in that** the rubber mixture contains 0.1 to 150 phr of colloidal silicic acid.

8. Rubber article according to Claim 1, **characterized in that** the oil for stabilizing the colloidal silicic acid is a mineral oil or a vegetable oil.

9. Rubber article according to any of Claims 1 to 8, **characterized in that** the colloidal silicic acid has an average particle size between 5 and 100 nm in diameter.

10. Rubber article according to any of Claims 1 to 9, **characterized in that** the colloidal silicic acid has an average particle density between 2 and 2.5 g/cm³.

11. Rubber article according to any of Claims 1 to 10, **characterized in that** the rubber mixture contains 1 to 300 phr of further additives.

12. Rubber article according to any of Claims 1 to 11, **characterized in that** it is a pneumatic vehicle tyre.

13. Rubber article according to Claim 12, **characterized in that** it is a pneumatic vehicle tyre having a one-part or multipart tread.

14. Rubber article according to Claim 12, **characterized in that** it is a pneumatic vehicle tyre containing side wall and/or inner core and/or apex and/or belt and/or shoulder and/or belt profile and/or squeegee and/or carcass and/or bead reinforcer and/or bandage and/or crescent-shaped reinforcing inlay.

15. Rubber article according to any of Claims 1 to 11, **characterized in that** it is a belt or a drivebelt.

## Revendications

1. Article en caoutchouc, **caractérisé en ce qu'**il est formé à partir d'au moins un mélange de caoutchouc ayant la composition suivante :
- au moins un caoutchouc polaire ou non polaire ;
- au moins une charge sous la forme d'une silice colloïdale, la silice colloïdale étant stabilisée dans au moins une huile ;
- des additifs supplémentaires.

2. Article en caoutchouc selon la revendication 1, **caractérisé en ce que** le caoutchouc polaire ou non polaire du mélange de caoutchouc est choisi dans le groupe constitué par le polyisoprène naturel et/ou le polyisoprène synthétique et/ou le caoutchouc de butadiène et/ou le caoutchouc de styrène-butadiène et/ou le caoutchouc de styrène-butadiène polymérisé en solution et/ou le caoutchouc de styrène-butadiène polymérisé en émulsion et/ou les caoutchoucs liquides et/ou le caoutchouc d'halogénobutyle et/ou le polynorbornène et/ou le copolymère isoprène-isobutylène et/ou le caoutchouc d'éthylène-propylène-diène et/ou le caoutchouc de nitrile et/ou le caoutchouc de chloroprène et/ou le caoutchouc d'acrylate et/ou le caoutchouc fluoré et/ou le caoutchouc de silicone et/ou le caoutchouc de polysulfure et/ou le caoutchouc d'épichlorhydrine et/ou le terpolymère de styrène-isoprène-butadiène et/ou le caoutchouc d'halogénonitrile-butyle et/ou le copolymère d'isoprène-butadiène.

3. Article en caoutchouc selon la revendication 1 ou 2, **caractérisé en ce que** le mélange de caoutchouc contient 0,1 à 100 phr d'au moins un polyisoprène naturel ou synthétique.

4. Article en caoutchouc selon la revendication 3, **caractérisé en ce que** le mélange de caoutchouc contient 1 à 80 phr d'au moins un polyisoprène naturel ou synthétique.

5. Article en caoutchouc selon l'une quelconque des revendications 1 à 4, **caractérisé en ce que** le mélange de caoutchouc contient 0,1 à 100 phr d'au moins un caoutchouc de butadiène.

6. Article en caoutchouc selon l'une quelconque des revendications 1 à 5, **caractérisé en ce que** le mélange de caoutchouc contient 10 à 99,8 phr d'au moins un caoutchouc de styrène-butadiène.

7. Article en caoutchouc selon l'une quelconque des revendications 1 à 6, **caractérisé en ce que** le mélange de caoutchouc contient 0,1 à 150 phr de silice colloïdale.

8. Article en caoutchouc selon la revendication 1, **caractérisé en ce que** l'huile pour la stabilisation de la silice colloïdale est une huile minérale ou une huile végétale.

9. Article en caoutchouc selon l'une quelconque des revendications 1 à 8, **caractérisé en ce que** la silice colloïdale présente une taille de particule moyenne comprise entre 5 et 100 nm en diamètre.

10. Article en caoutchouc selon l'une quelconque des revendications 1 à 9, **caractérisé en ce que** la silice colloïdale présente une densité de particule moyenne comprise entre 2 et 2,5 g/cm³.

11. Article en caoutchouc selon l'une quelconque des revendications 1 à 10, **caractérisé en ce que** le mélange de caoutchouc contient 1 à 300 phr d'additifs supplémentaires.

12. Article en caoutchouc selon l'une quelconque des revendications 1 à 11, **caractérisé en ce qu'**il s'agit d'un pneu automobile.

13. Article en caoutchouc selon la revendication 12, **caractérisé en ce qu'**il s'agit d'un pneu automobile comprenant une bande de roulement en une partie ou en plusieurs parties.

14. Article en caoutchouc selon la revendication 12, **caractérisé en ce qu'**il s'agit d'un pneu automobile contenant un flanc de pneu et/ou une âme intérieure et/ou un bourrage sur tringle et/ou une ceinture et/ou un épaulement et/ou un profilé de ceinture et/ou une raclette et/ou une carcasse et/ou un renforcement de bourrelet et/ou un bandage et/ou un insert de renforcement en forme de croissant.

15. Article en caoutchouc selon l'une quelconque des revendications 1 à 11, **caractérisé en ce qu'**il s'agit d'une sangle ou d'une courroie.
